(19) Europäisches Patentamt
European Patent Office
Office européen des brevets

(11) **EP 1 669 929 A2**

(12) **EUROPEAN PATENT APPLICATION**

(43) Date of publication:
**14.06.2006 Bulletin 2006/24**

(51) Int Cl.:
**G06T 11/20** (2006.01)

(21) Application number: **05252969.0**

(22) Date of filing: **13.05.2005**

| | |
|---|---|
| (84) Designated Contracting States:<br>**AT BE BG CH CY CZ DE DK EE ES FI FR GB GR HU IE IS IT LI LT LU MC NL PL PT RO SE SI SK TR**<br>Designated Extension States:<br>**AL BA HR LV MK YU** | (72) Inventor: **Lojou, Jean-Yves**<br>**13009 Marseille (FR)** |
| (30) Priority: **13.12.2004 US 10644** | (74) Representative: **Wytenburg, Wilhelmus Johannes et al**<br>**Mewburn Ellis LLP**<br>**York House**<br>**23 Kingsway**<br>**London WC2B 6HP (GB)** |
| (71) Applicant: **Vaisala Inc.**<br>**Tucson, AZ 85706-7155 (US)** | |

(54) **Systems and methods for presenting descriptions of conditions with respect to a surface**

(57) Systems and methods present descriptions of conditions with respect to a surface by preparing and displaying a graphic presentation that includes a perspective view of the surface and at least one body apart from the surface. A graphic feature of the body is in accordance with a condition to be displayed. Applications include the display of lightning density over a surface of the earth.

FIG. 1

**Description**

FIELD OF THE INVENTION

Embodiments of the present invention relate to presentations that describe conditions with respect to a surface.

BACKGROUND OF THE INVENTION

Conditions on a surface that vary with time and location on the surface may be difficult to understand when described numerically. Conventional graphic presentations may use varying color across the surface to indicate a condition (e.g., a range of colors on human skin portray local temperature of the skin). Yet, color may obscure other distinctions conventionally indicated with color (e.g., surface texture). In other conventional graphic presentations, the surface is distorted in a direction normal to the surface to indicate a numeric quantity associated with each location of the surface (e.g., a two dimensional map of a state is shown in three dimensional perspective having each county cievatcd in proportion to population of the county). Distorting the shape of the surface may also obscure features of the surface (e.g., continuity of roads and waterways). These techniques have only limited application for describing several conditions related to a surface.

For cxample, conventional presentations of weather conditions associated with the surface of the earth do not provide sufficient indication of the location and severity of weather conditions. In particular, conventional presentations of information describing lightning do not provide sufficient indication of the location and severity of weather conditions associated with lightning. Lightning may be described with a set of conditions as a function of time and location including, *inter alia*, flash type (e.g., cloud-to-ground or in-cloud), flashes per period of time, and magnitude of flashes. Unfortunately, a person seeking to understand a conventional presentation of lightning information is challenged with a visually difficult task. The locations associated with a particular high rate and/or a particular type of flashes may not be apparent. Trends in time and location for those features may not be apparent. In short, conventional presentations do not provide for visual comparison and correlation sufficient for easy understanding of the information being portrayed.

SUMMARY OF THE INVENTION

According to various aspects of the present invention, a method, performed by one or more processors, includes preparing first data for a graphic presentation that portrays a surface, and a body separated from the surface. The surface has a region. A projection of the body onto the surface defines the region. A graphic feature of the body is in accordance with second data associated with the region.

According to various aspects of the present invention, a method, performed by one or more processors, includes (a) accessing first indicia of identification of a plurality of locations relative to a surface; (b) accessing a respective value in accordance with each location of the plurality of locations to provide a plurality of values; and (c) preparing data for use by a provided display process. The data describes a first graphic representation in accordance with at least a subset of the plurality of values. The display process, in response to the data, displays the first graphic representation a distance from a provided representation of the surface, and distinguishes the subset as a projection of the first graphic representation onto the surface.

According to various aspects of the present invention, a method, performed by one or more processors, includes (a) accessing first data describing a region of a surface, the surface further comprising a second portion not within the region; (b) accessing second data describing a condition with respect to the region; and (c) preparing third data for use by a provided display process. The third data describes a first graphic representation in accordance with the first data and the second data. The display process, in response to the third data, displays the surface in a perspective view, displays the region visually distinct from the second portion of the surface, and displays the first graphic representation in perspective view at a distance away from the surface.

According to various aspects of the present invention, a method, performed by one or more processors, includes (a) accessing first data describing a first graphic representation in accordance with a condition with respect to a surface; and (b) combining the first data with second data describing the surface to provide third data. The third data is for use by a provided display process, wherein the display process, in response to the third data, displays the surface in a perspective view, and displays the first graphic representation in perspective view at a distance away from the surface.

According to various aspects of the present invention, a method, performed by one or more processors, includes forming a graphic presentation that describes a plurality of lightning discharges above ground. The presentation includes indicia of an in-cloud lightning discharge at an atmospheric location and including a ground surface onto which the location is projected. The presentation is in accordance with a reference time. Each lightning discharge of the plurality has an age relative to the reference time. A color of a pixel of the graphic presentation is determined by combining overlapping lightning discharges of the plurality in further accordance with the respective ages of each overlapping lightning discharge to be combined.

According to various aspects of the present invention, a method, performed by one or more processors, includes forming a graphic presentation that describes a plurality of lightning discharges, the plurality comprising discharges above ground and discharges to ground. Each discharge above ground having a respective location as projected onto the ground, each discharge to ground has a respective location at the ground. Each discharge has a respective age. The presentation includes a plurality of pixels, each pixel corresponding to a location. Each pixel has a color in accordance with a total quantity of discharges of the plurality at the pixel location and has a transparency in accordance with the respective age of each discharge of the total quantity at the pixel location.

According to various aspects of the present invention, a method, performed by one or more processors, includes forming a graphic presentation that describes a plurality of lightning discharges, the plurality comprising discharges above ground and discharges to ground. Each discharge above ground has a respective location as projected onto the ground. Each discharge to ground has a respective location at the ground. Each discharge has a respective age. The presentation includes a plurality of pixels, each pixel corresponding to a location, each pixel having a color in accordance with a quantity of discharges to ground of the plurality at the pixel location and having a transparency in accordance with the respective age of each discharge of the total quantity at the pixel location.

BRIEF DESCRIPTION OF THE DRAWING

Embodiments of the present invention will now be further described with reference to the drawing, wherein like designations denote like elements, and:

FIG. 1 is a functional block diagram of a system according to various aspects of the present invention;

FIG. 2 is a data flow diagram of a method for preparing and displaying a presentation that may be performed by the system of FIG. 1;

FIG. 3 is an exemplary presentation as prepared and displayed by an implementation of the method of FIG. 2;

FIG. 4 is a flow chart of a method for combining condition data according to transparency for a sequence of frames such as for the presentation of FIG. 3;

FIG. 5 is a flow chart of a method for preparing frames that include hot spots such as for the presentation of FIG. 3;

FIG. 6 is another exemplary presentation as prepared and displayed by another implementation of the method of FIG. 2;

FIG. 7 is a plan view of a sequence of frames comprising an animated presentation according to various aspects of the present invention;

FIG. 8 is a data flow diagram of another method that may be performed by the system of FIG. 1 for preparing and displaying a presentation of the type described with reference to FIGs. 3 and/or 6; and

FIG. 9 is a flow chart of a method for preparing a presentation describing conditions with respect to a surface of the type discussed above with reference to FIG. 6.

DETAILED DESCRIPTION OF THE PREFERRED EMBODIMENTS

Presentations prepared according to various aspects of the present invention may assist analysis of past conditions associated with a surface, may guide research into trends of such conditions, may guide prediction of future conditions, and/or may more clearly illustrate the scope and importance of warnings related to such conditions. For example, when a presentation is prepared and displayed using recently acquired information, timely warnings may be issued and suitable reaction by viewers of the warnings may be more likely.

A presentation, according to various aspects of the present invention, when displayed, provides information in a graphic format from which a viewer can easily understand one or more conditions associated with a region of a surface. Quantitative information for a region of the surface may be presented in non-numerib form for case of understanding and for ease of comparison of the quantitative information to limits and/or quantitative information associated with other regions of the surface.

Preferred presentations include one or more graphic features each having at least one of size, shape, position with respect to the surface, color, and/or texture in accordance with one or more numeric quantities. A presentation may include a set of related graphic features for describing related quantitative information. A feature, as discussed herein, may be a surface, a portion of a surface, a visual aspect of a surface, a visual aspect of a portion of a surface, a body separate from a surface, a visual aspect of a body, or a visual aspect of a portion of a body. For example, a first feature and second feature may be related as object and shadow, as if the first feature was opaque to a particular illumination and thereby casts the second feature as its shadow. Illumination maybe from a point or planar source; planar being preferred for perspective views so that the shadow remains directly adjacent the object without variation due to viewing angle.

A surface, as used herein, includes any physical boundary and any mathematically defined locus of points. A portion of a surface, herein called a region, is also a surface. Physical boundaries include boundaries of or within an object, entity, animal, plant, solid, liquid, gas, or plasma and may be an exterior boundary or an interior boundary such as with stratification. A mathematically defined surface (also called a virtual surface or region) includes any section on, near, or within a model of an object, entity, animal, plant, solid, liquid, gas, plasma, or space. A surface may be described with a two dimensional coordinate system in as much as its thickness is generally negligible. The coordinate system may be defined on the surface or be defined external to the surface. The surface may have an arbitrary shape, though generally the surface is isometric with respect to at least one external coordinate system.

The association of a condition with a surface may be for further understanding of the surface, further understanding of the condition, or for convenience. Generally, the association indicates or describes a relationship between data describing the surface and data describing the condition. Any conventional data storage technology may be used to implement associations as discussed herein, including database technologies.

A condition may include any physical property or non-physical property determined in any conventional manner (e.g., measured, determined by analysis, or sampled). The condition may be a single variable over time and location with respect to the surface (e.g., surface temperature) or a set or tuple of variables (e.g., magnetic flux magnitude and direction). A physical property may include, for example, a dimension, mass, weight, density, buoyancy, temperature, entropy, conductivity, charge, structure, material, composition, transparency, reflectivity, color, permeability, magnetism, chemical reactivity, nuclear reactivity, or susceptibility to any medicinal or biological activity. A non-physical property may include parameter of a science, mathematics, or interest. Examples of non-physical properties include those not generally considered deterministic (e.g., properties that are the subject of sampling and statistical research) such as climate, health (e.g., disease control), education, sociology (e.g. culture and language), politics (e.g., interest group demographics), economics (e.g., market demographics), or population of animals or plants (e.g., age, breed). Properties may be arranged in a set for codification so that an ordinal of the set provides a numerical property (e.g., colors, opinions, marital status).

A condition may be a function of any parameter (e.g., variable) of interest. A physical condition, for example, may be a function of time. A non-physical condition, for example, may be a function of the age of the subjects sampled. A condition as a function of time may be entirely in the past, substantially in the present, and/or in the future. The variable of interest may be linear (e.g., characterized by same duration units of time) or nonlinear (e.g., characterized by an exponential series of duration units of time such as half-life).

For clarity of description and without reducing the scope of the claims, the remainder of this specification primarily describes systems, methods, and presentations related to weather conditions near the surface of the earth as examples of various systems and methods in implementations of the present invention. For example, warnings of severe weather conditions expected on the ground and warnings of severe weather conditions above ground (e.g., for pilots and research) may be perceived quickly and accurately from graphic features of presentations discussed herein.

As discussed below, graphic features describe lightning with reference to parameters including flash location, number of flashes per unit time, and flash density per unit area per unit time. Other graphic features are used in various other implementations of the present invention for describing lightning with reference to other parameters. These other parameters may include any measurable or analytic variable, such as altitude of the average electrical activity of a flash, magnitude and quantity of radio signal (e.g., VHF) sources attributable to the flash, magnitude of continuing current in a flash, stroke or discharge peak current magnitude, flash, stroke, or discharge duration or energy, charge moment, or flash area (e.g., for a branched cloud to ground flash).

In other implementations according to various aspects of the present invention, presentations may use graphic features to describe other weather conditions with reference to locations such as temperature, wind speed, wind direction, barometric pressure, moisture content, precipitation, pollutants, particulates, and density (e.g., mass per unit volume).

Presentations prepared according to various aspects of the present invention may assist analysis of past weather conditions, may guide research into weather system behaviors, may guide weather prediction, and may more clearly illustrate the scope and importance of weather related warnings. For example, when a presentation is prepared and displayed using recently acquired information, timely warnings may be issued and suitable reaction to the warnings may be more likely.

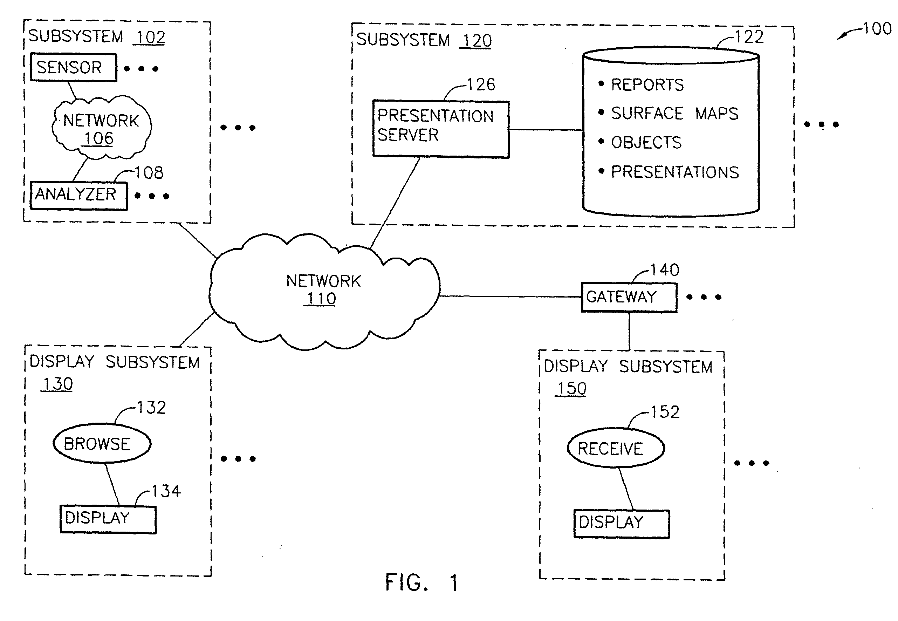

A system according to various aspects of the present invention, may accomplish one or more of: preparing, modifying, storing, transmitting, and displaying presentations and portions of presentations as discussed herein. Modification may include any conventional graphical data manipulation (e.g., constructing, composing, editing, combining, linking, compiling, rendering, and animating). For example, system 100 of FIGs. 1, 2, 4, 5, 8, and 9 performs all of these functions. In other implementations, fewer functions are performed and unused portions of system 100 are omitted. System 100 includes data acquisition subsystem 102, network 110, presentation subsystem 120, display subsystems 130 and 150, and gateway 140. Functional blocks may be implemented with conventional processing technology and include any conventional storing technology. Stores comprise memory devices (e.g., semiconductor, magnetic, optical, write once, and read/write memory in any combination) for storing data and instructions (e.g., object oriented programming (OOP) objects) for methods performed by the processors.

A data acquisition system provides information for presentation including descriptions of surfaces and conditions. Any conventional data acquisition system may be used. In an implementation for lightning conditions on the surface of the earth, data acquisition subsystem 102 may be of the type described in U.S. Patent Application "Systems And Methods For Spectral Corrected Lightning Detection" by Martin Murphy or "Systems And Methods For Time Corrected Lightning Detection" by Martin Murphy, Wolfgang Schulz, Alburt Pifer, and Kenneth Cummins each assigned to Vaisala Inc., and incorporated herein by reference. Such a system may provide reports periodically (e.g., every minute) of lightning events including the type, magnitude, and location of lightning flashes. Types may distinguish cloud-to-ground (CG) lightning and in-cloud (IC) lightning. Data acquisition subsystem 102 (typical of any quantity and mix of types of data acquisition subsystems of system 100) includes one or more lightning sensors (typically thousands located across a continent), private network 106, and one or more analyzers 108. Data reported or accessed from sensors 102 is conveyed by network 106 to analyzer 108. Analyzer 108 determines a type, magnitude, and location for each lightning event attributed to sets of data reported by sensors 104; and provides or allows access to this information by one or more presentation subsystems. A presentation subsystem may access data from several data acquisition systems responsible for different types of data (e.g., lightning events from a first subsystem; and wind speed and temperature from another subsystem).

A network comprises nodes and links in any relationship and conveys information between nodes via one or more links. A network may include any combination of modems, codecs, transceivers, bridges, hubs, repeaters, gateways, routers, mirrors, servers, stores, paths, lines, services, and protocols. Any one or more conventional network technologies may be used. For example, networks 106 and 110 may be distinct or common, and employ the same or different network technologies. In one implementation network 106 is based on private land line telephone technology; and network 110 includes local area networks and the global Internet.

A presentation subsystem obtains data from one or more data acquisition subsystems and performs methods for preparing presentations. Results may be stored, provided or allowed to be accessed via a network. A presentation subsystem may include conventional server and data storage structures and functions. For example, presentation subsystem 120 (typical of any quantity and mix of types of presentation subsystems of system 100) subscribes to and obtains reports prepared by data acquisition subsystem 102 and prepares presentations and partial presentations for use by other servers and services via network 110. Presentation subsystem 120 includes presentation server 126 and store 122. Presentation server 126 performs methods for preparing and displaying presentations. Store 122 maintains access by server 126 to reports received from data acquisition subsystems, surface maps, graphical objects, and presentations. Such information may be as determined by other systems and loaded onto store 122 (e.g., relatively static maps of earth geography) and/or as determined by server 126 (e.g., dynamic, intermediate, and final results of presentation preparation). Presentation subsystems may cooperate in series or parallel for division of preparation responsibilities and redundancy.

A display subsystem makes a presentation visible to a viewer. The display subsystem may include any conventional structures and functions to implement making a presentation visible. The viewer is typically a human viewing the presentation for educational purposes. The viewer may also be an operator of another machine or process for which information conveyed by the presentation assists the viewer in efficient operation of the machine or process (e.g., a pilot of an aircraft or an air traffic controller directing pilots). The link from a presentation subsystem to a display subsystem may use a public network (as shown) or a private link (e.g., a satellite to aircraft secured link). For example, display subsystems 130 and 150 are typical of any quantity and mix of types of display subsystems of system 100. Display system 130 includes a conventional browse process 132 (e.g., an Internet browser) and conventional display 134 (e.g., a personal computer with a monitor). Display subsystem 150 includes a conventional receive process 152 (e.g., commercial television or cable set top box) and conventional display 154 (e.g., NTSC or PAL signal monitor). In other implementations display subsystems include conventional projection display technologies and vehicular display technologies (e.g., cockpit displays, goggles, and helmet displays). Display process 134 and/or receive process 154 may include controls implementing interaction of the viewer with modifications of the presentation. For instance these processes may include receiving inputs from the viewer to provide the viewer with a custom presentation based on the received presentation. A viewer may have start, stop, replay, direction, and speed controls for controlling a received animated presentation. These processes may have graphic rendering capability to produce related presentations having different content (e.g., subset) or different zoom, lighting, or point of view.

A gateway accesses a presentation from a first network and provides access to the presentation via a second network different from the first. A gateway may translate signaling and/or messaging protocols and may provide buffering or other storage to provide such access. A gateway may include broadcasting capability supporting simultaneous viewing by display subsystems. For example, gateway 140 (typical of any quantity and mix of types of gateway subsystems of system 100) subscribes to and obtains presentations prepared by presentation subsystem 120. In one implementation, gateway 140 obtains a presentation via the Internet and broadcasts it at one or more times to commercial television audiences.

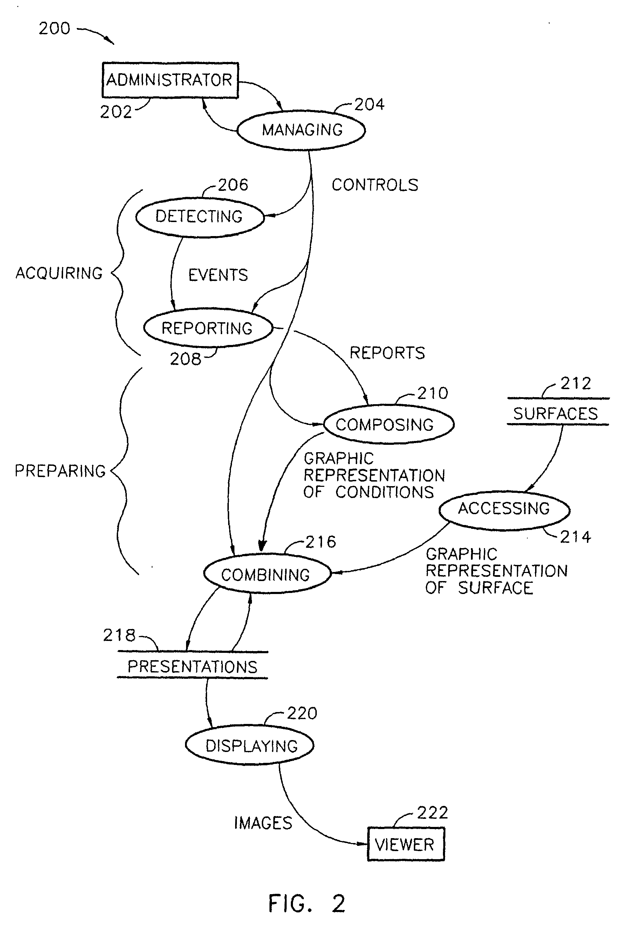

A method, performed by a system (e.g., one or more subsystems, processors, servers, computers, personal computers, workstations), according to various aspects of the present invention, facilitates the display of a presentation. For example, method 200 of FIG. 2 performed by system 100 prepares and displays a presentation that describes one or more conditions with respect to a surface. Method 200 includes managing process 204, detecting process 206, reporting process 208, composing process 210, surfaces store 212, accessing process 214, combining process 216, presentations store 218, and displaying process 220. Processes of method 200 are performed when sufficient data is available. When a stream of information describing events is available (e.g., real-time or from storage), method 200 may display a stream of images to the viewer. Storage (not shown) may be provided between processes to manage use of processing resources. Any number of engines may cooperate to perform method 200. Each engine (e.g., a circuit or subsystem of system 100) may include any mix of conventional software, firmware, and hardware (e.g., application specific integrated circuits) to efficiently accomplish some or all of the processes of method 200.

Method 200 may include centralized dynamic administration. Administration may include registration and linking of subsystems, gateways, and viewers for access rights and provisioning of processes and data facilitating the display of presentations. For example, system 100 receives input from an administrator 202 for performing method 200. A human administrator 202 may conduct a session with a presentation server 126 to provide input and receive output from managing process 204. Managing process 204 requests from administrator 202 values for configuration parameters and supplies controls to detecting process 206, reporting process 208, composing process 210, and combining process 216 to govern their operation on particular presentations and suitable categories of presentations. Controls may include values of configuration parameters, default values, and subscriptions.

Administering may be accomplished without central management. For example, an administrator and managing process may be implemented at each subsystem of system 100. Each administrator and managing process may effect processes performed by that subsystem and data stored by that subsystem.

Configuration parameters may include any conventional process control parameters, for example, parameters suitable for assigning processor resources at particular times for the preparation of presentations according to time of day, availability of suitable resources, availability of data (e.g., conditions and surfaces), and permitted presentation preparation activities (e.g., according to paid up rights of registered viewers, gateways, and other consuming services).

Permitted presentation preparation activities may include conventional configuration parameters specifying the content, format, access, and delivery of presentations and portions of presentations. System 100 may deliver presentations on subscription or request from gateways 140 and viewers 130 and 150.

A subscription may include one or more specifications of data (conditions and surfaces), processing resources (e.g., identity and capacity of servers, services, and stores, times of day and periodicity if any) and destinations (e.g., identity of subsystems, licensed gateways, or viewers). The purpose of a subscription may be to facilitate a permitted presentation preparation activity. Data may be specified as reported by a data acquisition subsystem, or intermediate or final data reported from a presentation subsystem. Managing process 204 may coordinate subscriptions. A process receiving a subscription may subscribe to data from processes that provide its inputs. Such interprocess subscriptions may be implemented in any conventional manner.

Acquiring data for a presentation may include detecting events (e.g., conditions, changes of conditions), reporting events, and/or reporting statistics describing events. Acquiring data for a presentation may be accomplished by a data acquisition subsystem as discussed above. For example, detecting process 206 provides, for each of a plurality of events an event tuple of the time, location with respect to the surface, and description of the event. The description may include any quantity of numerical descriptors of the event (e.g., magnitude of measured aspects of the event). For lightning events, a magnitude of the current of the flash may be included in the event tuple for the flash. Numerical data of an event description may be codified by predefined types (e.g., enumerations), or thresholds, or ranges (e.g., bins). Detecting process 206 may report events individually as they are detected, report events in fixed quantities of event tuples, or report events in various quantities of event tuples for fixed periods of time (e.g., all events in the preceding minute). Detecting process 206 may provide reports in response to subscriptions for such reports. A subscription may define enumerations and/or bins in general; and/or refer to predefined enumerations and/or bins of interest.

A reporting process receives data describing events and provides data describing a statistical analysis of the received data. For example, reporting process 208 receives event tuples from detecting process 20b, computes statistics, and provides summary tuples. A summary tuple may specify type(s) of event, period(s) of time, region(s) with respect to the surface, and statistic(s) compiled from event tuples that meet these criteria. A statistic includes any conventional numeric quantity (e.g., count, average, maximum, minimum, mean, mode, variance) that may apply to any conventional binning scheme (e.g., binning by types of event or by range of magnitude of a characteristic of the event). Reporting process 208 may report summary tuples at any suitable time, including as needed for presentations. Reporting process 208 provides reports in response to subscriptions for such reports. A subscription may define the period, region, statistics of interest (e.g., by selecting a predefined computational method, or by supplying a method for the computation of the desired statistic), and reporting periodicity.

Preparing a presentation may include composing graphic representations describing conditions and combining these graphic representations with graphic representations that describe the surface to which the conditions relate. A sequence of combined graphic representations may produce an animated display within a relatively narrow range of values or samples of interest (e.g., a time lapse presentation similar to time lapse photography). Preparing may be accomplished by a presentation subsystem. Preparing may include a composing process and a combining process. A composing process constructs a graphic representation describing one or more conditions in accordance with summary information describing events. For example, composing process 210 receives summary tuples reported by reporting process 208, constructs a 2-dimensional and/or a 3-dimensional graphic representation based on those summary tuples, and provides the graphic representation of conditions to a combining process.

A graphic representation that describes one or more conditions may be a region or a body. Each graphic representation has one or more attributes (also called features or parameters as discussed above) in accordance with the summary information. Any conventional attribute may be used (e.g., position with respect to the surface, shape, size, color intensity and or behavior). For example, position may include coordinates (eg., center point) of the surface over which a body is to be displayed and may further include a dimension for separation between a point on the surface and a point of the body so that the body is displayed separated from the surface. The separation may be vertical height. In a 3-dimensional graphic representation, the body may have a substantially planar surface adjacent to the subject surface. Position may also include coordinates for locating a region on the surface (e.g., a translucent color overlay, an opaque color overlay, a display flash behavior, an icon).

A graphic representation of the surface may be prepared in advance and merely accessed from a store for reuse. The graphic representation of the surface may describe features of the surface that are related to or, on the other hand independent of the conditions discussed above. For example, a graphic representation of a portion of the earth's surface for a presentation of lightning conditions may include invariant features such as elevation of terrain, bodies of water, and political boundaries. One or more regions of the surface may describe any parameter as discussed above, for example, a parameter causally related to weather (e.g., surface temperature) or a parameter not related to weather (e.g., political persuasion). One or more conditions to be represented may be specified by the operator (e.g., selected from a list of conditions).

A graphic representation may be implemented as one or more OOP objects or data structures that include data for input to a rendering process (e.g., a scene graph, subgraph, or scene graph object) and/or data for input to a display process (e.g., a bitmap). The data structure may be implemented in any conventional data storage technology (e.g., array, linked list, database, document object model, an OOP object, or class). In one implementation, composing process 210 provides a graphic representation of the type described in "The Java 3D API Specification" vol. 1.3 June 2002 by JavaSoft, a Sun Microsystems, Inc. business, incorporated herein by reference. In another implementation, each graphic representation includes a bitmap of pixels each pixel having indicia of color and transparency. For convenience a graphic representation of a surface is called a surface object and a graphic representation of a condition is called a condition object A graphic representation of a surface or condition object combined with one or more surface and/or condition objects is called a combo object.

A surfaces store includes one or more surface objects for each different surface or portion of a surface of interest. For example, one object from surfaces store 212 may consist of an opaque surface object for a 1 kilometer square region of the earth's surface. Surface objects in store 212 may be accessed by coordinates (e.g., longitude and latitude) of a point (e.g., center or origin) of the surface portrayed by the surface object. Typically, thousands of surface objects are stored in and accessed from surfaces store 212. One surface object may already include pixel color for terrain (as if illuminated at an angle), water, and political boundaries, in another implementation a combo surface object is prepared and stored. The combo surface object may include a graphic representation of the surface combined with one or more graphic representations of features that are also invariant to the presentation being prepared. For example, political boundaries may be described with a graphic representation.

When surface objects are prepared in advance, an accessing process merely provides a suitable surface object to a combining process. For example, accessing process 214 responds to a subscription to deliver to combining process 216 all suitable surface objects for a particular combo object. Several surface objects may have already been combined with each other so that one reusable combo surface object may be accessed and delivered to process 216 for each of several presentations.

A combining process provides a combination graphic representation comprising the graphic representation that describes one or more conditions and a graphic representation that describes the surface to which the conditions relate and stores the combination graphic representation in a presentations store (e.g., as a frame). A combining process may include conventional rendering to produce and store a combination graphic representation in bitmap form. For example, combining process 216 uses conventional graphics operations to account for transparency of objects (e.g., overlap and occlusion), dimensions in perspective, and effects of prescribed lighting of the combination (e.g., the reflectivity of surfaces and angular orientation, shadow of one object onto another) when producing a combo object from at least one surface object and at least one condition object. Conventional graphics operations may include traversal of a scene graph by a conventional rendering process, and/or determining a color of a pixel in a combo object in accordance with rules for transparency and priority of surface objects and condition objects. Condition objects may have higher priority than all surface objects.

As used herein, transparency of an overlying portion is the extent that an underlying portion of the presentation is apparent below the overlying portion of a different color. Of course, a transparent overlying portion would be invisible. All visible values of transparency are analogous to the physical property of translucency. This confusion of physical terminology is unfortunately widespread among English speaking computer graphic artisans.

For instance, to provide a combo object in a bitmap form from surface object bitmaps and condition object bitmaps, a pixel of the combo bitmap is assigned the color of the highest priority opaque condition object and if none then the highest priority opaque surface object. Then, if condition objects arc within view at the location of this pixel, the resulting color is shaded by the sum of all non-opaque condition objects. Finally if no condition objects are within view at the location of the pixel, the resulting color is shaded by the sum of all non-opaque surface objects. Such combination may be accomplished using conventional arithmetic and conventional values for color and transparency.

A combo object may include several surface objects and several condition objects. For example, it may be desirable to portray in a presentation an area of the surface of the earth that is large enough to show lightning from a storm system having several regions (e.g., 10 regions) of relatively high lightning activity. The combo object may include an opaque surface object for terrain, a higher priority opaque surface object for political boundaries, and one or more still higher priority translucent (e.g., so that terrain features are recognizable) surface object for areas that in the recent past (e.g., for a particular past period) have sustained more than a minimum threshold quantity of lightning events. The combo object may include a condition object having a perimeter defined to include an area where more than a threshold quantity of flashes occurred (herein called a hot spot). Because the portion of the earth's surface for the combo object may be substantially larger than the area of one hot spot, several relatively smaller hot spots may be part of the same combo object. A combo object may include condition objects for cloud-to-ground (CG) lightning, condition objects for in-cloud (IC) lightning, and condition objects for total lighting (TL) being a combination ofCG and IC lightning events.

Combining process 216 may link surface objects and condition objects to a scene graph to accomplish combining. The resulting combo object in scene graph form may be rendered as needed by displaying process 220. Generally, scene graph form requires less storage capacity than bitmap form and may also be preferred for communication.

Each combo object resulting from combining process 216 may be stored in presentations store 218. Presentations may be indexed by time and coordinates (e.g., longitude and latitude) of an anchor (e.g., a center point or corner) of the surface portrayed by the combo object. A presentation having behavior, a sequence of frames, or a sequence of presentations may be stored in any manner to allow rapid and uniform access time for a relatively smooth animated display. Store 218 may include presentations in unrendered (e.g., scene graph or subgraph) and rendered (e.g., bitmap) forms.

A displaying process makes a presentation visible to a viewer. A displaying process may be performed by a displaying subsystem. For example, displaying process 220 obtains one or more bitmaps (e.g., a series for animation) from presentations store 218 and makes an image of the presentation visible on a monitor for viewing by human viewer 222. Conventional image scanning and refreshing technologies may be used. Displaying process 220 may accept controls from viewer 222 for control of animation and scaling of bitmap images. Displaying process 220 may obtain unrendered presentations and/or portions of presentations and perform rendering prior to or in conjunction with displaying. For instance, unrendered presentations may be used to implement relatively sophisticated interactive controls from the viewer, such as changing the point of view, selecting and omitting condition objects, and changing the relative priority among condition objects (e.g., bring to front).

A presentation, in an implementation according to various aspects of the present invention, portrays a two dimensional view of a surface colored to show one or more conditions with respect to the surface. For example, information describing lightning with respect to a surface of the earth may be presented using condition objects to portray quantitative data. Lightning information used as a basis for such a presentation may include a quantity of flashes per area per period for each area of the surface to be portrayed (e.g., one area per pixel) and for one or more periods.

Lightning information may be in terms of flashes, discharges, and/or strokes. Generally, a flash includes several discharges or strokes over a relatively brief period of time so as to be perceived by a human observer as a single lightning event though several discharges or strokes are easily distinguished by conventional detectors. Generally, a stroke is a discharge to ground. An IC lightning flash may include several discharges; and a CG lightning flash may include several discharges also called strokes. In various implementations of the present invention, any of flash, discharge and/or stroke may be substituted for flash, discharge, or stroke discussed herein.

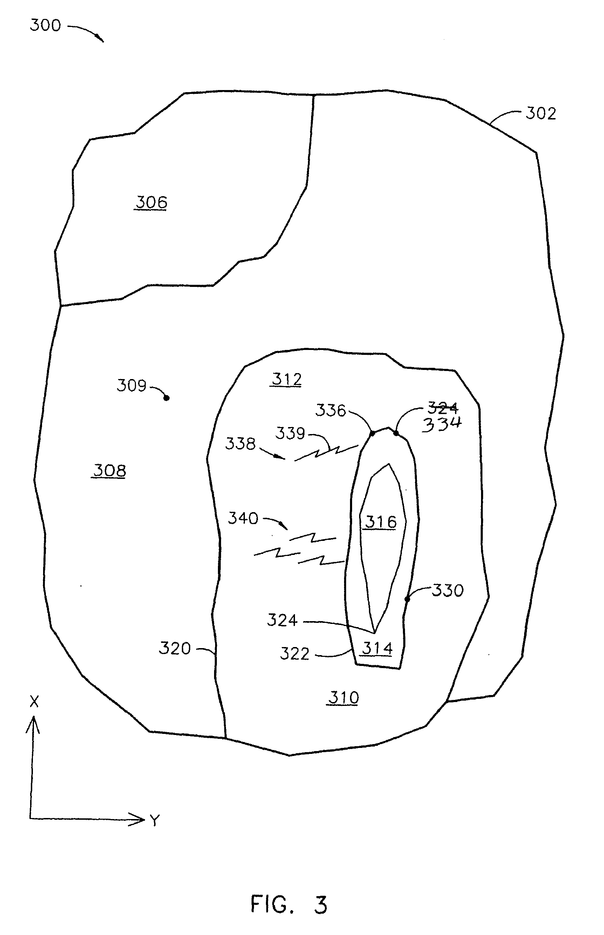

For example, presentation 300 of FIG. 3 portrays lightning information with respect to an arbitrary portion 302 of a surface. FIG. 3 is a line art plan for a color presentation. Portion 302 includes a lake 306 and terrain 308. Terrain 308 also includes an indicated center of CG lightning events 309. A region 310 of terrain 308 is bounded by boundary 320 and includes region 314. Region 310 further includes centers of CG lightning events 330, 334, and 338. Region 310 further includes a plurality of indicia of IC lightning events 340 and in particular indicia 339 of IC lightning events positioned between indicia 336 and 338. Region 314 is bounded by boundary 322 and includes region 316. Region 316 is bounded by boundary 324.

Presentation 300 in bitmap form may consist of an array of pixels of equal size arranged in a coordinate system. As shown, surface features and lightning locations are mapped onto such a bitmap to accomplish scaling with little or no distortion. Any mapping (e.g., scaling) may be used including nonlinear mappings as desired. Some distortion may resul when surface 308 portrays a nonplanar surface.

Presentation 300 may portray lightning information for lightning occurrences during a series of consecutive periods. A suitable number of periods (e.g., 60) may be used, each period having any suitable duration (e.g., 1 minute). Each period may have an age associated with it. In other words, presentation 300, though static as shown, may portray current as well as recent past lightning information. When lightning information to be displayed includes a relatively large number of periods, a selection of consecutive periods may be used for each presentation 300. The selection may be grouped into a few general categories such as current, recent past, and distant past. Current events may include events within a most recent period (e.g., having a duration in a range from about 1 minute to about 5 minutes in various implementations). Recent past events may include events within a next most recent period (e.g., having a duration in a range from about 5 minutes to about 15 minutes). Distant past events may include events within a next most recent period (e.g., having a duration in a range from about 10 minutes to about an hour). A presentation may include a graphic representation for each group.

According to various aspects of the present invention, a graphic representation may have age dependent transparency. In one implementation, graphic representations for current information are given high priority and may be essentially opaque(e.g., having relatively low values of transparency). As the presentation proceeds in time, the age dependent transparency causes these graphic representations to persist and eventually disappear.

In another implementation, recent past events are essentially opaque, current events have decreasing transparency, and distant past events have increasing transparency. As the presentation proceeds in time, age dependent transparency causes the graphic representation of an event to begin transparent, proceed to opaque, and return to transparent.

Changing transparency over time is herein described as a bloom or decay of visibility. As discussed above, transparency may indicate any parameter of interest. A bloom rate or decay rate may be a function of time (e.g., age relative topresentation) or any other parameter of interest.

A series of static presentations as discussed above may constitute an animated presentation of a moving window of selected consecutive periods. Presentation 300 may be a member of a series of presentations, each member portraying lightning information for a series of periods. For example, lightning information in 55 consecutive periods (numbered 1-55) may be presented in a sequence of 50 frames (numbered 1-50), each frame comprising one presentation of the type discussed with reference to presentation 300. For instance, presentation 300 may be frame 23 of the sequence of presentations, portraying lightning information for the series of periods 23-28 (e.g., the first frame portraying periods 1-5). For frame 23 the age of period 28 is 0, 27 is 1, 26 is 2, and so on. By displaying the series of frames in relatively rapid sequence, an effect somewhat similar to time lapse photography may be achieved for better understanding of the lightning information being portrayed (e.g., trends).

Table 1 describes surface objects that may be part of a presentation of the type illustrated by presentation 300. Table 2 describes condition objects that may be part of a presentation of the type illustrated by presentation 300.

TABLE 1

| Surface Object | Description |
| --- | --- |
| Terrain | A set of colors not used for condition objects may be used for geographic features of a surface. For example, geographic features for earth surface may include lake 306 (e.g., dark blue) up to an average water line. Terrain 308 may be portrayed in a set of shades (e.g., olive) to portray elevation. For example, simulated illumination from a suitable point source (e.g., analogous to the sun) may be used to effect rendering that portrays mountain slopes in shades of the set. Preferably, terrain is of constant opaque transparency. |
| Political boundary | A set of colors not used for condition objects may be used for boundaries of a surface. The same set as for terrain may be used (e.g., olive). For example, political boundaries for earth surface may be portrayed as if etched into the surface as a v-shaped groove, illuminated, and rendered in a manner similar to the manner that elevated terrain is rendered. Preferably, political boundaries are of constant opaque transparency. |

TABLE 2

| Condition Object | Description |
| --- | --- |
| Older CG lightning | A pixel is given a characteristic color (e.g., red) if more than a limit quantity of cloud-to-ground strokes contacted the surface within the area of the surface mapped to the pixel. A stroke having less than a limit magnitude may be ignored. Strokes that pass through a pixel based volume extending vertically away from the surface may be included in the quantity. Each counted stroke must have an age within a relatively older range of ages. Preferably, the transparency of the pixel increases toward becoming invisible as time progresses in the presentation. |
| Newer CG lightning | A pixel is given a characteristic color (e.g., yellow) if more than a limit quantity of cloud-to-ground strokes contacted the surface within the area of the surface mapped to the pixel. A stroke has less than a limit magnitude may be ignored. Strokes that pass through a pixel based volume extending vertically away from the surface may be included in the quantity. Each counted flash must have an age within a relatively newer range of ages. Preferably, the transparency of the pixel increases toward becoming invisible as time progresses in the presentation. |
| CG lightning hot spot | Pixels within a circle centered on a mapped location having at least a minimum quantity of relatively newer cloud-to-ground lightning strokes or flashes are lightened by interpolating the original color with a suitable lighter color (e.g., cream having RGB= (100%, 98%, 94%)) A stroke or flash having less than a limit magnitude may be ignored. Each counted flash must have an age within <br><br> a relatively newer range of ages. The diameter of the hot spot condition object for the circle may be proportional to the quantity of lightning strokes or flashes that meet the above criteria. The interpolation may be executed once for each qualifying stroke or flash to present a lightness according to a total number of strokes or flashes. Preferably, the transparency of the pixel increases toward becoming invisible as time progresses in the presentation. When the criteria on age is narrow, and the presentation is part of an animated series, the hot spot condition object may appear as a brief display flash in time lapse presentation. |
| Older IC lightning | A pixel is given a characteristic color (e.g., light blue) if more than a limit quantity of in-cloud discharges or flash paths occurred above the surface within a pixel based volume extending vertically away from the surface. A discharge or flash having less than a limit magnitude may be ignored. Each counted discharge or flash must have an age within a relatively older range of ages. Preferably, the transparency of the pixel increases toward becoming invisible as time progresses in the presentation. |
| Newer IC lightning | A pixel is given a characteristic color (e.g., light green) if more than a limit quantity of in-cloud flashes or discharge paths occurred above the surface within a pixel based volume extending vertically away from the surface. A discharge or flash having less than a limit magnitude may be ignored. Each counted discharge or flash must have an age within a relatively newer range of ages. When the criteria on age is narrow, and the presentation is part of an animated series, the hot spot condition object may appear as a brief display flash in time lapse presentation. In another implementation an icon may be shown oriented between end points of an 1C lightning event. |

Several rates of visibility decay may be used in presentation discussed above. For example, decay rates may be in increasing order as follows: older CG lightning (e.g., 30 minutes), newer CG lightning (e.g., 1 minute), older IC lightning (e.g., 30 seconds), newer IC lightning (e.g., 10 seconds), and CG lightning hot spot (1 min). In other implementations, several visibility bloom rates may be used in addition to or in place of visibility decay rates. Bloom rates may be used to portray simulated effects, measured consequences, or results of analysis or predictions.

The color of pixels of presentation 300 may be determined according to a processing priority from highest to lowest as follows: newest CG lightning, newer IC lightning, newer CG lightning, older CG lightning, older IC lightning, political boundary, terrain.

Surface objects in bitmap form may be prepared and stored in surfaces store 212 for reuse as needed. A bitmap comprises pixels, each pixel having position, color, and transparency. A bitmap representation of a portion of the surface of the earth may include a pixel for each area of the surface portion. The bitmap may be created from data describing elevation for each area having coordinates of longitude and latitude. Suitable elevation data may be obtained from a Digital Elevation Model of the type available via the World Wide Web at www.edcdaac.usgs.gov/gtopo30.asp.

Terrain pixel color may be determined using an hypsometric color scale, applied to each pixel according to an average elevation of the corresponding area. For example, the elevation of each of four corners of a rectangular (e.g., square) area may be averaged to provide an elevation of the rectangular area. In one implementation the color scale is expressed in red, green, blue (RGB) components for several cardinal elevations as shown in Table 3. A range from 0 to 255 is used for each component value. Linear interpolation of each RGB component may be applied for elevations between the cardinal values.

TABLE 3

| Elevation in meters | R | G | B |
|---|---|---|---|
| -100 and below | 52 | 72 | 45 |
| 0 | 72 | 92 | 65 |
| 200 | 96 | 111 | 80 |
| 500 | 102 | 108 | 74 |
| 1000 | 119 | 118 | 87 |
| 2000 | 110 | 96 | 77 |
| 3000 | 142 | 143 | 103 |
| 4000 | 164 | 164 | 128 |
| 6000 and above | 255 | 255 | 25.5 |

Elevation may be portrayed by using a slightly lighter color of pixels on an illuminated portion of a geographic feature and/or a slightly darker color of pixels on a shadowed portion of a geographic feature. Terrain pixel color may be adjusted to simulate lighting from a corner of the surface being portrayed (e.g., a north west corner of the surface object). For each pixel, an average orientation of the corresponding surface area (presumed rectangular) may be determined as a vector having four elevations, one for each corner of the area. A color correction factor may be computed from components of this vector. Pixel color may be determined from a default color DC multiplied by such a color correction CC computed as follows:

$$f = \begin{bmatrix} O_x = \dfrac{p_{NE} - p_{SW}}{100} \\ O_y = \dfrac{p_{NW} - p_{SE}}{100} \\ O_z = \sqrt{2} \end{bmatrix} \bullet \begin{bmatrix} I_x = -\dfrac{\sqrt{2}}{2} \\ I_y = -\dfrac{\sqrt{2}}{2} \\ I_z = \dfrac{1}{10} \end{bmatrix} = \dfrac{O_x I_x + O_y I_y + O_z I_z}{\sqrt{O_x^2 + O_y^2 + O_z^2}} \tag{1}$$

$$CC_{xy} = (0.88 + 0.46 f)$$

$$AC_{xy} = DC_{xy} \cdot CC_{xy}$$

where: $P_{NE}$, $P_{SE}$, $P_{SW}$, and $P_{NW}$ are the elevations of the corners of the area;
CC is the color correction factor for the pixel at location (x,y);
DC is the default color of the pixel at location (x,y); and
$AC_{xy}$ is the adjusted color of the pixel at location (x,y).

The color of each terrain pixel that is on or near a political boundary may be altered to indicate the boundary in the bitmap. Boundary information may be obtained from the Geographical Information Service (GIS).

A combining process may provide a presentation as a series of frames, each frame comprising a combo object in any form (e.g., a scene graph or bitmap). The combo object in any frame of the series of frames may be a result of combining that includes surface objects and condition objects that were presented in prior frames. Including older condition data in the preparation of newer presentations may serve to make trends in the condition data more apparent to a viewer. For example, lightning information for each frame may be composed as one or more condition objects (e.g., bitmaps) and combined with a suitable surface object (e.g., a bitmap as discussed above). In one implementation, lightning event data is available in summary every minute in a sequence of minutes. A combining process for lightning information presentations may use the most recent 60 minutes of lightning condition data to provide a combo object for each frame of a series of frames. The next frame in the series may use 1 newer minute of condition data and 59 prior minutes used in the previous frame for a total of 60 minutes of data. Other implementations use about 10 to about 20 minutes of data.

A condition object may include color and transparency. A combining process may combine condition objects in accordance with a transparency of each condition object. Transparency may be proportional to a variable (e.g., parameter) of interest. For instance, when time is a variable of interest, transparency may be proportional to age of the condition data. Newest data may be substantially opaque (e.g., allowing terrain and political boundaries to vaguely show through) and oldest data may be transparent. A sequence of frames when displayed, each having a combo object comprising data combined in accordance with its age, may exhibit the effect that as the data ages it fades from view.

For example, a surface object bitmap may be combined on a pixel by pixel basis with several condition object bitmaps (or a series of condition data) to produce a combo object bitmap. In one implementation, the color of each pixel of a combo object bitmap may be determined in accordance with an interpolation of the color of a pixel of a surface object bitmap and the color and transparency of a series of aging condition data associated by location with the pixel of the surface (e.g., a moving window of 60 samples of data as discussed above).

Each next frame of a sequence of frames may be formed with reference to a prior frame combined with data from a new period; or only with reference to a raw data bufrer that has been updated to reflect all data including data from a new period. The latter technique is preferred for simplicity of combining respective transparencies of data having various ages. For example, when current, recent past, and distant past groups do not reflect equal durations, the presentation may portray a time compression effect.

Transparency is preferably represented as a floating point numeric value. Another implementation subjects age (or transparency) to a quantization to produce transparency for each particular pixel of an object as one of about 60 values.

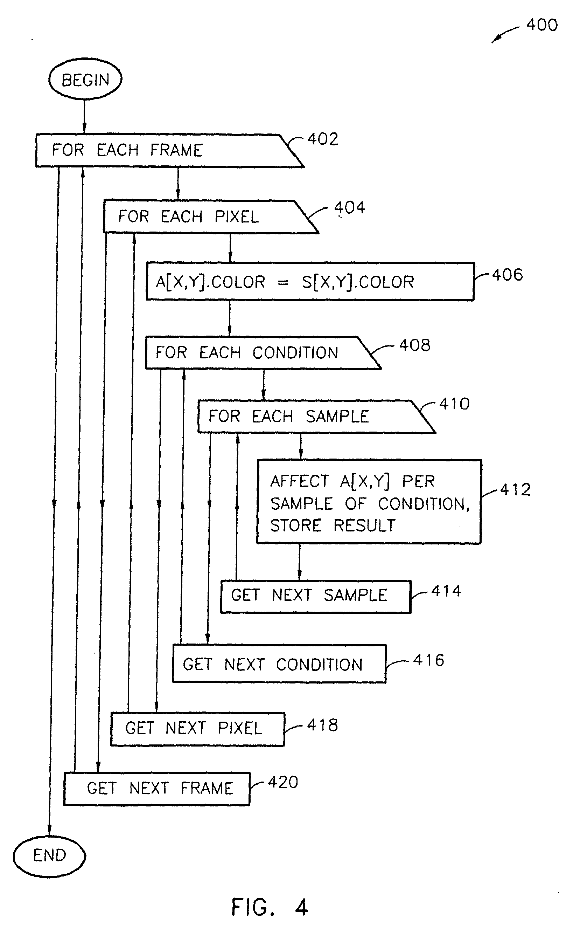

A method 400 of FIG. 4 for combining condition data according to transparency may proceed as fallows. Enter a first loop (402) for preparing frames i n a sequence of frames. Enter a second loop (404) for preparing each pixel of the surface object bitmap for the current frame; operations within the loop then proceed on the current pixel. For the current pixel, assign (406) the color and transparency of the surface object pixel to an accumulator pixel to initialize the accumulator pixel. Review the data of all conditions with respect to the surface position corresponding to the current pixel position and select zero or more conditions to affect the current pixel. Selection may analyze conditions and pick the condition having the highest priority. Enter a third loop (408) for processing selected conditions. Enter a fourth loop (410) for combining the effect of each sample of data describing the selected condition with the accumulator pixel; operations within the loop then proceed on the current sample. For the current sample of data of the selected condition, determine an age of the sample, a transparency for that age, and a color. Determine a new color to assign to the accumulator pixel as a linear interpolation between the current color of the accumulator pixel and the color of the current sample. In the interpolation, give effect (412) to the transparency of the current sample. Store (412) the result of interpolation as the new value of the accumulator pixel. Repeat the fourth loop to process (414) all samples. Store the accumulator pixel color in the combo object for the current frame. Repeat the third loop to process (416) all conditions. Repeat the second loop to process (418) all pixels of the current frame. Repeat the first loop to process (420) all frames of the sequence.

The following equations may be used by a combining process implementing a method (400) of combining condition data according to transparency.

$$(2)$$

$$R_{accumulator} = (A_s \cdot R_s) + (1 - A_s) \cdot R_{accumulator}$$
$$G_{accumulator} = (A_s \cdot G_s) + (1 - A_s) \cdot G_{accumulator}$$
$$B_{accumulator} = (A_s \cdot B_s) + (1 - A_s) \cdot B_{accumulator}$$

where: $s$ denotes the current sample; and
$A_s$ is the age of the current sample.

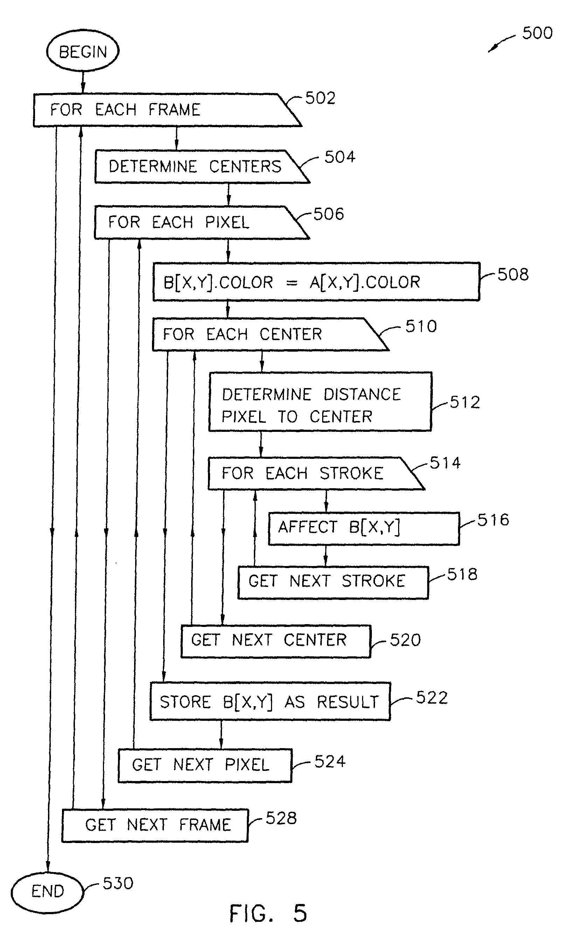

A method 500 of FIG. 5 for preparing frames that include condition objects for hot spots as discussed above with refercncc to Table 2 and FIG. 3 may proceed as follows. Enter a fast loop (502) for preparing frames in a sequence of frames. Review (504) the condition data of all pixels of the current fraine to find a central pixel for each desired hot spot. A hot spot may be centered on a pixel corresponding to a surface location at which more than a minimum quantity and magnitude of flashes were counted in the condition data applying to the current frame. Enter a second loop (506) for preparing each pixel of the surface object bitmap for the current frame; operations within the loop then proceed on the current pixel. For the current pixel, assign (508) the initial color and transparency to an accumulator pixel to initialize the accumulator pixel. The initial value may be the value of the combo object pixel produced by the method of combining conditions according to transparency, discussed above. Enter a third loop (510) for combining the effect of each desired hot spot with the accumulator pixel; operations within the loop then proceed with respect to the central pixel of the current hot spot. For the current hot spot, determine (512) a distance from the current pixel to the central pixel of the current hot spot, determine a weight for interpolation. Determine a new color and transparency to assign to the accumulator pixel as a linear interpolation between the current color of the accumulator pixel and a color and transparency used to indicate a hot spot. In one implementation, a cream color is used having RGB=(100%, 98%, 94%). Apply (514) the interpolation repeatedly (518) for a quantity of repetitions corresponding to a quantity of hot spots summarized for the current hot spot. In each interpolation, give effect (516) to the weight of the current hot spot on the current pixel. Store the result of interpolation as the new value of the accumulator pixel. Repeat the third loop to process (520) all hot spots. Store (522) the accumulator pixel color and transparency in the combo object for the current frame. Repeat the second loop to process (524) all pixels of the current frame. Repeat the first loop to process (528) all frames of the sequence.

The following equations may be used by a combining process implementing a method for preparing frames that include condition objects for hot spots.

$$(3)$$

$$W_f = e^{-5\frac{D}{D_o}}$$
$$R_{accumulator} = (W_f \cdot R_f) + (1 - W_f) \cdot R_{accumulator}$$
$$G_{accumulator} = (W_f \cdot G_f) + (1 - W_f) \cdot G_{accumulator}$$
$$B_{accumulator} = (W_f \cdot B_f) + (1 - W_f) \cdot B_{accumulator}$$

where: $W_f$ is the weight for interpolation for the current hot spot;
$D$ is a distance between the current pixel and the central pixel of the current hot spot;
$D_o$ is a standard hot spot diameter that may be scaled with the zoom ratio of the displayed presentation; and
$RGB_f$ is the standard color and intensity of a hot spot, generally a light color.

Use of equation (3) for weight has the effect of creating a larger diameter and lighter color hot spot as the quantity of hot spots the hot spot represents increases, A hot spot may represent a quantity of strokes in a recent period of time (e.g., most recent 1 minute).

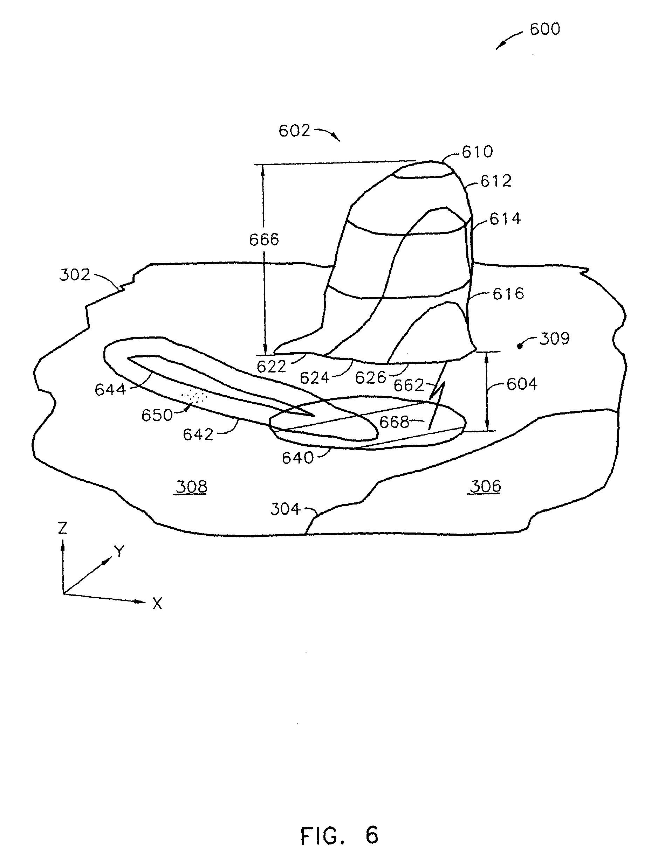

FIG. 6 is a line art plan for a color presentation that portrays a view in perspective of a surface and a body apart from the surface. As shown, surface features and lightning locations are mapped in a perspective view of one surface and one body. Other presentations, according to various aspects of the present invention, may include several surfaces and/or several bodies. Techniques of the present invention may be extended to the presentation of a body to represent conditions with respect to a physical object or a surface of a physical object. The relative size of the body with respect to the object or surface may be quite different than that shown in FIG. 6. In other words, the body may be relatively larger than the surface or object for which conditions are being described by the body. A projection of the body onto the surface may be scaled, for example, to permit the presentation of greater resolution or more numerous characteristics.

A presentation, according to various aspects of the present invention, portrays a three dimensional view of a surface and one or more bodies apart from the surface. The surface may have one or more graphic features that represent quantitative data describing one or more conditions with respect to the surface. Each body may have one or more graphic features that represent quantitative data describing conditions with respect to the surface. The position of the body in relationship to the surface may also represent quantitative data describing one or more conditions with respect to the surface. Graphic features may include colors, intensities, transparencies, shapes, dimensions, and compositions of these aspects including dots, patterns, and textures. Graphic features may also include structures of the body (e.g., geometry, faces, corners, holes, bumps, dimples, ridges, skins, cross sections, cores). Still further, graphic features may include portrayed movements of the body (e.g., spin, flash, modulation of shape) or movements of parts of the body (e.g., animated icons).

For example, quantitative data describing lightning with respect to a surface of the earth may be presented using colors of the surface and bodies apart from the surface, each body having a dimension perpendicular to the surface that represents lightning stroke, discharge, or flash density for an area of the surface adjacent to the body. In other words, a presentation may include a surface combo object prepared by combining a surface object with one or more condition objects; and, include a body object representing a condition object such as total lightning (TL) density. A body object may be a combo object prepared by combining one or more condition objects. Lightning information used as a basis for such a presentation may include a quantity of strokes, discharges, or flashes per area per period for each area of the surface to be portrayed (e.g., one area per pixel) and for one or more periods.

Presentation 600 of FIG. 6 includes a surface and a body apart from the surface. Presentation 600 portrays lightning information with respect to an arbitrary portion 302 of the earth's surface in a coordinate system where x and y are considered horizontal and z is considered vertical. Items in FIG. 6 having numbers in the 300's correspond generally to items described with reference to FIG. 3. Conditions with respect to the surface are presented with features including bodies (one shown 602), regions (640, 642, 644), discrete points (309, 650) and icons (662). Each such feature of presentation 600 may be implemented using a condition object as discussed above.

A body 602 has a substantially flat base (not shown) uniformly located a distance 604 apart from surface 302. As shown in line art, body 602 includes vertical strata 610, 612, 614, and 616; and horizontal strata 622, 624, and 626. Lines demarcating strata may be omitted when strata are of distinguishing color, intensity, and/or transparency. The spacing (604) of the body from the surface and/or the height (666) of the body may be proportional to a condition (e.g., a variable of interest).

Regions on terrain 308 may be nested and overlap. Generally, regions of the type illustrated by region 640, 642, and 644 have color and translucency to illustrate overlap without boundaries as shown by line art in FIG. 6. Terrain 308 includes 640 portraying a projection from body 602 (e.g., a shadow cast by body 602). Region 640 overlaps a portion of each of regions 642 and 644. Terrain 308 includes region 642 that includes nested region 644 and solitary points 650. Regions 642 and 644 may be formed from relatively less recent data than data of the same type used to construct body 602. Regions 642 and 644 may be formed and presented as discussed above with reference to FIG. 3 regions 310 and 314.

Presentation 600 may include effects from multiple sources of illumination. Terrain 308 may have surface features (e.g., mountains and political boundaries) illuminated from a suitable point source (e.g., a heavenly body, not shown). Projected regions for one or more bodies (640 for 602) may simulate a shadow from illumination different from the illumination for terrain surface features. To reduce confusion due to parallax, projections are made from a planar source of illumination (e.g., in a horizontal plane parallel to the xy plane of the coordinate system) out of view.

Lightning icon 662 may be one of several that identify one or multiple (e.g., a branched icon) areas of surface 308 of notable CG lightning. An area with less notable quantity of flashes or lower rate of flashes may be indicated as a point (309, 650). Icons and points may be highlighted using hot spots as discussed above with reference to FIG. 3.

A feature of a presentation, according to various aspects of the present invention, may be proportional to a numeric quantity of a condition. Proportionality may be by any suitable linear or nonlinear relationship between a graphic feature and a numeric quantity of a condition (e.g., a statistic). For example, in presentation 600, the height 666 of a portion of body 602 over an area 668 of surface 308 may be proportional to a quantity of strokes, discharges, or flashes that exceed a limit magnitude in the period covered by the presentation (e.g., a one minute interval) and that occurred within area 668. Because the quantity of strokes, discharges, or flashes is counted for a fixed period of time, height 666 indicates a rate. Because the quantity of strokes, discharges, or flashes is counted for a fixed area, height 666 indicates a spatial density. Body 602 includes a respective height over each area (dx, dy) of projection 640, Consequently, the shape of body 602 follows from the rate and or density indicated by lightning conditions with respect to surface 308. Height 666 may indicate CG lightning stroke or flash rate, IC lightning discharge or flash rate (lightning over a path projected onto surface 308), or, preferably, a sum of CG and IC lightning flash rates also called total lightning (TL) density.

Vertical stratification may indicate standardized severity levels of a condition mapped vertically. Horizontal stratification may make more apparent a spatial location corresponding to a vertical stratification. Stratification, horizontal and/or vertical may be projected as boundaries in region 640 (only horizontal shown).

Separation distance 604 according to a preset amount may apply to one or more (e.g., all) bodies of presentation 600 (only one 602 shown). Other implementations may present such a separation distance in proportion to a condition respectively for each body or assign a set of different distances for stratifying information regarding respective different conditions.

Presentation 600 may portray lightning information for lightning occurrences during a series of consecutive periods. A suitable number of periods may be used (e.g., 60 for a 2 dimensional presentation, 15 for a 3 dimensional presentation), each period having any suitable duration (e.g., 1 minute). Each period may have an age associated with it. In other words, presentation 600, though static as shown, may portray relatively recent lightning conditions (icons, discrete points) as well as relatively less recent lightning information. When lightning information to be displayed includes a relatively large number of periods, a selection of consecutive periods may be used for each presentation 600. A series of static presentations as discussed above may constitute an animated presentation of a moving window of selected consecutive periods in a manner analogous to the manner described with reference to FIG. 3.

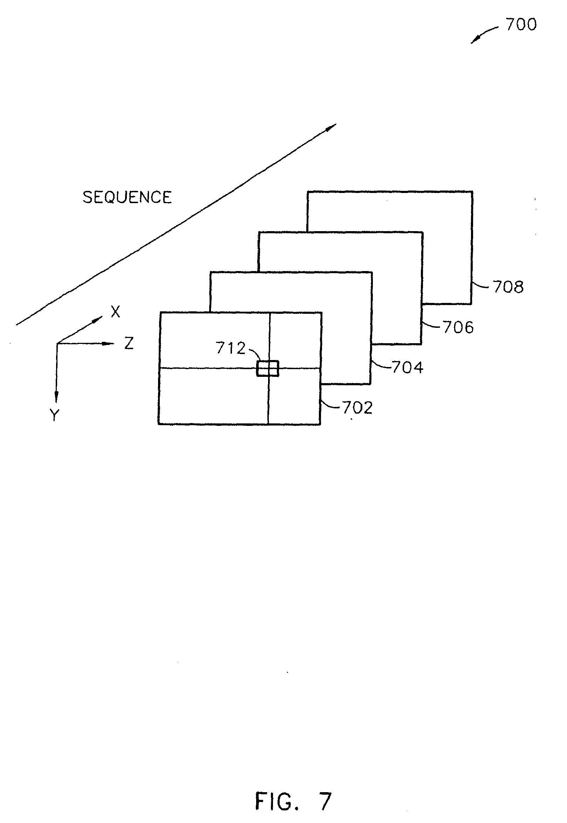

A presentation may comprise any number of frames. For example, presentation 700 of FIG. 7 includes frames 702, 704, 706, and 708. Each frame is a two dimensional member of a sequence. The color, intensity, and transparency of any pixel 712 may be determined with respect to a coordinate system of the frame (x,y) and a coordinate position in the sequence (t). Of course, the subject matter of each frame may be a perspective view of subject matter (surface and bodies) in an independent three dimensional coordinate system.

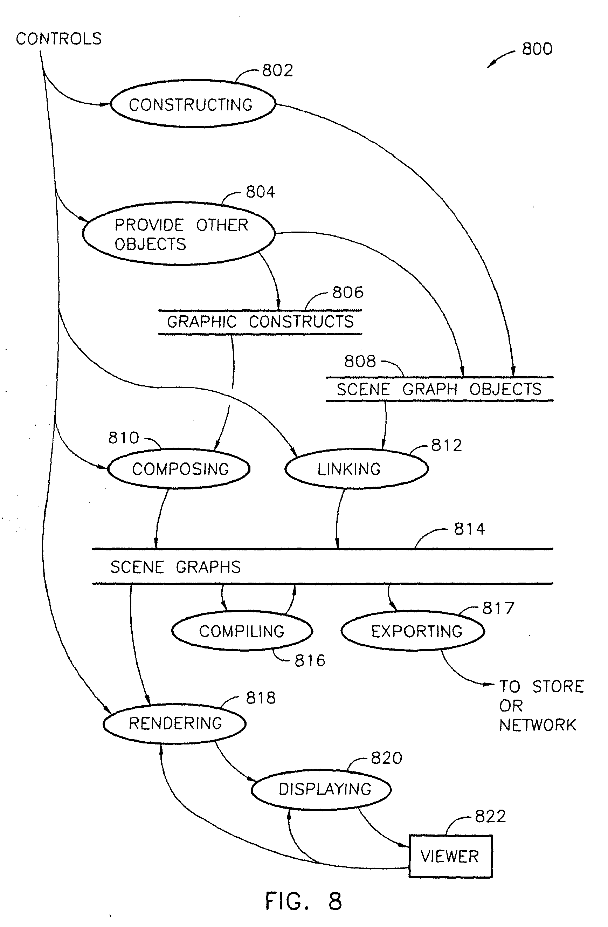

A method for presenting information describing conditions with respect to a surface may use scene graph objects. For example, method 800 of FIG. 8 includes constructing process 802, provide other objects process 804, graphic constructs store 806, scene graph objects store 808, composing process 810, linking process 812, scene graphs store 814, compiling process 816, exporting process 817, rendering process 818, and displaying process 820. Method 800 may be implemented in an OOP environment. Controls such as for initialization, environment, and scope of operations may be specified by a managing process as discussed above and provided to processes 802, 804, 810, 812, and 818.

Each scene graph and scene graph object has a conventional constructing method. Constructing process 802 constructs scene graph objects for storage in scene graph objects store 808 (e.g., a class hierarchy). These objects may include surface objects and condition objects as discussed above. Each object may include a scene graph object of the type described in the Java 3D API referred to above, comprising, for example, one or more nodes of a scene graph describing content, transformations, views, and behaviors. For example, a shape node may include software (data and processes) that expresses a relationship of a graphic feature of a surface object in accordance with elevation and boundary information from other systems. Another one or more shape nodes may include software that expresses a relationship of a graphic feature of a condition object in accordance with data reported from detecting and reporting processes discussed above with reference to FIG. 2. Methods of the constructed objects may then be called to configure the behavior and appearance of constructed objects for a particular presentation.

In addition to constructed objects, graphic constructs (e.g., for use in surface objects and/or content objects) may be received from other systems. For example, icons (e.g., in-cloud branching icons) and behaviors (e.g., hot spot behaviors) may be obtained from other systems for use in particular presentations. Provide other objects process 804 obtains these suitable graphics constructs and stores them in graphics constructs store 806.

A composing process may create and manipulate any and all aspects of a scene graph. For example, composing process 810, reads graphics constructs, and may execute expressions to define suitable graphic features for a presentation. Composing process 810 may call methods of scene graph objects in store 808 to set configuration data according to information describing one or more surfaces and conditions to be included in a particular presentation. Composing process 810 may accomplish any functions discussed above with reference to FIG. 2.

A scene graph is generally a type of acyclic directed graph having nodes and branches between nodes. Each scene graph object may consist of one or more nodes of a scene graph. Linking process 812 forms a scene graph from scene graph objects recalled from store 808 and stores the result in scene graph store 814. Linking may include adding nodes and performing other structural modifications (e.g., moving nodes, removing nodes, copying nodes from other graphs). A complete scene graph implements all aspects of a presentation, and may enable viewer interaction with the presentation as discussed above.

A compiling process prepares part or all of a scene graph for efficient rendering or communication. A compiled scene graph may require less processing time to traverse and/or less storage capacity to store and transmit. For example, compiling process 816 may compile a surface object for use (without modification) in numerous frames of a presentation. Results of compilation may be stored in the same scene graph (e.g., having a mix of compiled and uncompiled nodes) or as a fully compiled scene graph.

Exporting process 817 provides access to scene graphs from store 814 by other systems or subsystems. Exporting process 817 may serialize and/or compress a scene graph for efficient storage and communication.

Rendering process 818 traverses a scene graph to produce an image suitable for displaying. Information sufficient for rendering may be read from the scene graph being rendered.

Displaying process 820 receives an image from a rendering process and operates equipment to produce a visible image for viewing by a human viewer. The viewer may control the presentation by providing input to rendering process 818 and/or displaying process 820.

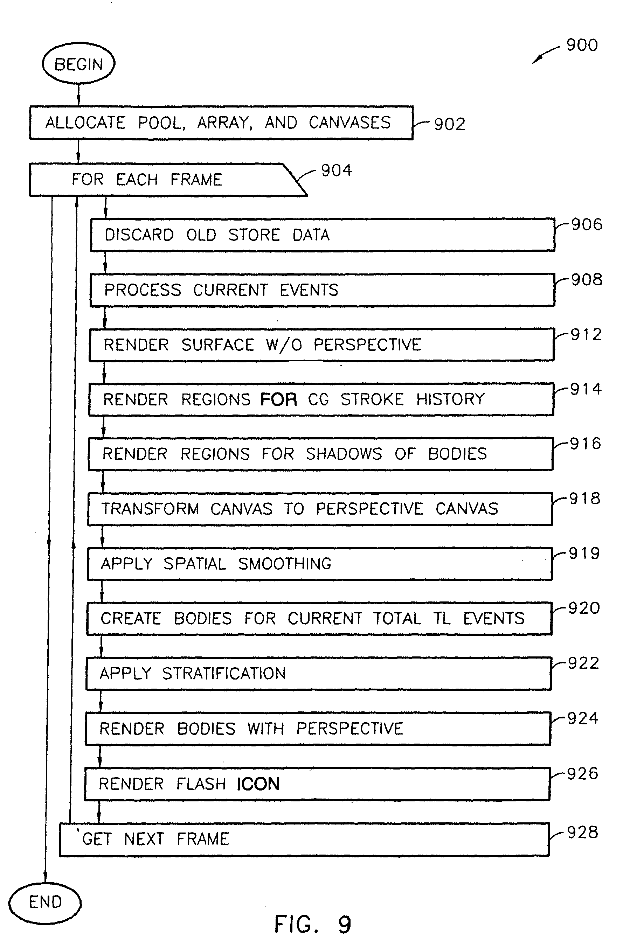

A method 900 of FIG. 9 for preparing a presentation describing conditions with respect to a surface of the type discussed above with reference to FIG. 6 may produce the presentation as a series of frames, each frame comprising a bitmap. Execution of the method may proceed as follows.

Allocate (902) and initialize a flash descriptions pool. Flash quantity for each type of flash is a condition to be described with reference to the surface. Because many areas will have no reported statistics, a pool of flash descriptions, as opposed to an array, is used for efficient use of memory. Up to a maximum age may be allowed (e.g., 15 minutes regardless of the number of frames in the sequence). Flash descriptions exceeding that age may be deallocated. As a first report of a flash for an area is processed, a flash description structure is allocated in the pool and linked to the most recently preceding flash description structure for the same area (if any) in a prior frame (if any). As new reports of flashes for this area are processed, counters in the flash description structure are incremented. Consequently, memory is used only for areas as needed per frame. A flash description structure may include identification of the area the description applies to, an indication of age of the data in this description (e.g., frame number, start time for the frame), stroke couni for CG flashes in this area during this frame period (e.g., 1 minute), and discharge path count for IC discharge paths that include this area during this frame period, and a pointer to the next older flash description structure (if any) for this same area.

Allocate and initialize an area descriptions array, each cell having an area description structure for one area. An area description structure may include a pointer to the most recent flash description structure, a CG stroke count attributed to this area for this frame, an IC discharge path count attributed to this area for this frame, a subtotal of smoothed CG strokes for all prior frames (e.g., up to 15 minutes), a subtotal of smoothed IC discharge paths attributed to this area summed for all prior frames, a total of the smoothed subtotal CG strokes and smoothed subtotal IC discharge paths for ready access to smoothed total lightning events (TL) for this area for all prior frames, and four altitudes (see equation (4)) of this area.

Allocate and initialize a surface canvas for a view of the surface without perspective. Each area of the surface corresponds to one pixel of the canvas. Each pixel has RGB color values and an intensity value. In one implementation, the pixel for an area is part of the area description structure and a separate canvas is omitted.

Enter a first loop (904) for a sequence of frames; the following operations being applied to a current frame of the sequence.

Discard (906) from the flash descriptions pool all flash descriptions having greater than the maximum allowed age. As each is removed, adjust the corresponding area description subtotals of smoothed CG strokes, smoothed IC discharge paths, and smoothed TL total by subtracting as needed.

Process (908) a stream of lightning event summaries and/or lightning event reports until the end of the period for this frame is reached (e.g., 1 minute). On allocation of a flash description structure, link it from the corresponding area description structure and to a prior flash description structure, as needed. Each summary or report includes one or more designated areas. According to the designated area(s), increment counts in flash description structures (e.g., one area for a CG event, generally several areas for an IC discharge path).

For the current frame, copy CG and IC counts from flash description structures to corresponding counts in the area description structures. Perform (910) a smoothing operation on these counts in the area descriptions array and post the smoothed results by overwriting the counts in both the area descriptions array and the flash description structures. A 9x9 uniform convolution mask may be used. Update the smoothed subtotals by adding in the smoothed counts. Overwriting the counts in the flash description structures permits accurate adjustment of the subtotals of smoothed CG strokes and smoothed IC discharge paths when the oldest flash description structures are discarded.

Render (912) the surface onto the surface canvas using elevations, adjusted colors to show orientation, and adjusted colors on and next to political boundaries.

When rendering regions to show whether or not an area experienced any CG strokes for the duration of the sequence, overwrite (914) the surface canvas with a standard color (e.g., yellow) for each area having a nonzero smoothed subtotal CG strokes. When rendering regions to show proportional quantity of CG strokes, overwrite the surface canvas for each area having smoothed subtotal CG strokes with a color selected from a range (e.g., red to yellow) according to smoothed subtotal CG strokes. In one implementation, color is selected based on $\log_{10}$(smoothed subtotal CG strokes).

Enter a second loop to consider each area of the area descriptions array. If an area has more than a minimum smoothed TL total, apply (916) a region color adjustment to the pixel of the surface canvas corresponding to this area. The minimum quantity test causes a relatively small quantity of strokes, discharges, flashes, and/or paths to be ignored. The region color adjustment creates regions of the type described with reference to region 440 (e.g., shadows of bodies). The color adjustment may render pixels in the region darker in color (e.g., about 43%) than pixels not in the region. Repeat the second loop to process all areas.

Transfer (918) the surface canvas onto a perspective canvas for the frame. Specify a suitable view point (e.g. 20000m above the mid point on the south edge of the surface looking north).

Enter a third loop for considering each area of the area descriptions array. If an area has more than a minimum smoothed TL total, calculate an altitude for each of the four corners of the area as follows. A set of condition objects is created (920) where each condition object has a standard separation (e.g., a minimum altitude of 3500m) from the surface.

$$(4)$$

$$Alt_{NW} = 3500 + \frac{7}{4}\left(Z_O + Z_{NW} + Z_N + Z_W\right)$$

$$Alt_{NE} = 3500 + \frac{7}{4}\left(Z_O + Z_{NE} + Z_N + Z_E\right)$$

$$Alt_{SE} = 3500 + \frac{7}{4}\left(Z_O + Z_{SE} + Z_S + Z_E\right)$$

$$Alt_{SW} = 3500 + \frac{7}{4}\left(Z_O + Z_{SW} + Z_S + Z_W\right)$$

where 3500 is the altitude of a planar base of the body;

$Z$ is $\log_{10}(CG + IC)$ for the area under consideration (subscript O) or one of its 8 neighbors (subscript N, NE, SE, S, SW, W, and NW)

When no vertical stratification is to be shown, assign a standard color to the area (e.g., RGB=(100%, 98%, 94%)). When a range of color is used to show stratification and thereby highlight warning and caution levels of the lightning density condition, select and apply (922) a color according to the average of the four altitudes from a range of color (e.g., purple to red in rainbow order, yellow for caution, red for warning). Repeat the third loop to process all areas.

Render (924) the set of condition objects onto the perspective canvas for the frame.

Enter a fourth loop to consider each CG flash of an area of the surface on the forefront of the storm. Render (926) a flash icon onto the perspective canvas from the base of the body directly above the current forefront area to the current forefront area. The icon may follow a pseudorandom path or a branching path from the body to the surface. Repeat the fourth loop to process all forefront areas.

Repeat (928) the first loop to process each frame in the sequence.

In other implementations according to various aspects of the present invention, presentations of lightning information may associate other lightning and weather parameters with the features and graphic representations discussed above (e.g., surface region color, hot spots, height and color of a body, icons). For example, surface color may be used to indicate accumulated precipitation; and body height (Z in equation (4)) may represent wind speed, surface temperature, barometric pressure, relative humidity, other lightning parameters discussed above, or a combination or these parameters.

A presentation in another implementation according to various aspects of the present invention includes more than one surface and may include more than one body outside or between the surfaces. Surface combo objects and/or body objects may describe conditions of one surface and/or conditions relative to two or more surfaces (e.g., diserential conditions) and may be located at distances relate to each of several surfaces to further illustrate any combination of parameters of interest.

The foregoing description discusses preferred embodiments of the present invention which may be changed or modified without departing from the scope of the present invention as defined in the claims. While for the sake of clarity of description, several specific embodiments of the invention have been described, the scope of the invention is intended to be measured by the claims as set forth below.

**Claims**

1. A method performed by one or more processors, the method comprising preparing first data for a graphic presentation that portrays:

   a surface having a region; and
   a body separated from the surface, a projection of the body onto the surface defining the region, wherein a graphic feature of the body is in accordance with second data associated with the region.

2. The method of claim 1 wherein the graphic feature comprises a dimension of the body.

3. The method of claim 2 wherein the graphic feature comprises a color of the body.

4. The method of claim 1 wherein the graphic feature comprises a shape of the body.

**5.** The method of claim 1 wherein the graphic feature comprises a texture of the body.

**6.** The method of claim 1 wherein the graphic feature comprises a distance between the body and the surface.

**7.** The method of claim 1 wherein the region has a closed perimeter.

**8.** The method of claim 1 wherein the region is indicated by a color of the surface.

**9.** The method of claim 1 wherein the region is indicated by a texture of the surface.

**10.** The method of claim 1 wherein the surface includes relief in accordance with third numeric data associated with the region.

**11.** The method of claim 1 wherein the surface includes color in accordance with third numeric data associated with the region.

**12.** The method of claim 1 wherein:

the second data comprises a plurality of subsets each subset having a respective age;
the color of the region is in further accordance with a respective color of each subset and a respective transparency of the color of each subset; and
each respective transparency corresponds to the respective age.

**13.** The method of claim 1 wherein the surface comprises a map of physical features.

**14.** The method of claim 1 wherein the surface comprises a map of political features.

**15.** The method of claim 1 wherein:

the region comprises a first plurality of pixels, each pixel of the first plurality corresponding to a respective location of the region of a plurality of locations; and
the body comprises a second plurality of pixels, each pixel of the second plurality having a respective value in accordance with a portion of the second data associated with a respective location of the plurality of locations.

**16.** The method of claim 1 further comprising repeating preparing respective first data for a sequence of graphic presentations wherein each respective region of each presentation consists of locations at which a common condition exceeds a common threshold.

**17.** The method of claim 1 further comprising repeating preparing respective first data for a sequence of graphic presentations wherein for each difference of position of respective regions of sequential presentations there is a corresponding difference of position of respective bodies of the sequential presentations.

**18.** The method of claim 1 wherein the presentation further portrays an object between the surface and the body.

**19.** A method performed by one or more processors, the method comprising:

accessing first indicia of identification of a plurality of locations relative to a surface;
accessing a respective value in accordance with each location of the plurality of locations to provide a plurality of values; and
preparing data for use by a provided display process, the data describing a first graphic representation in accordance with at least a subset of the plurality of values, wherein the display process, in response to the data, displays the first graphic representation a distance from a provided representation of the surface, and distinguishes the subset as a projection of the first graphic representation onto the surface.

**20.** The method of claim 19 wherein:

the data further describes a second graphic representation in accordance with the respective locations that correspond to the subset of the plurality of values; and

the display process, in response to the second graphic representation, displays a portion of the provided representation of the surface in accordance with the second graphic representation.

21. The method of claim 20 wherein the data further describes the second graphic representation as a combination of colors rendered to a particular pixel of the second graphic representation, each color having a respective transparency.

22. A method performed by one or more processors, the method comprising:

accessing first data describing a region of a surface, the surface further comprising a second portion not within the region;
accessing second data describing a condition with respect to the region; and
preparing third data for use by a provided display process, the third data describing a first graphic representation in accordance with the first data and the second data, wherein the display process, in response to the third data, displays the surface in a perspective view, displays the region visually distinct from the second portion of the stuface, and displays the first graphic representation in perspective view at a distance away from the surface.

23. A method performed by one or more processors, the method comprising:

accessing first data describing a first graphic representation in accordance with a condition with respect to a surface; and
combining the first data with second data describing the surface to provide third data, the third data for use by a provided display process, wherein the display process, in response to the third data, displays the surface in a perspective view, and displays the first graphic representation in perspective view at a distance away from the surface.

24. A method performed by one or more processors, the method comprising:

forming a graphic presentation that describes a plurality of lightning discharges above ground, the presentation including indicia of an in-cloud lightning discharge at an atmospheric location and including a ground surface onto which the location is projected; wherein
the presentation is in accordance with a reference time;
each lightning discharge of the plurality has an age relative to the reference time; and
a color of a pixel of the graphic presentation is determined by combining overlapping lightning discharges of the plurality in further accordance with the respective ages of each overlapping lightning discharge to be combined.

25. A method comprising outputting a signal that comprises indicia of a presentation resulting from a provided performance of the method of claim 24.

26. The method of claim 25 wherein the signal is adapted for propagation via a digital link.

27. The method of claim 25 wherein the signal is adapted for television display.

28. A method performed by one or more processors, the method comprising forming a graphic presentation that describes a plurality of lightning discharges, the plurality comprising discharges above ground and discharges to ground, each discharge above ground having a respective location as projected onto the ground, each discharge to ground having a respective location at the ground, each discharge having a respective age, the presentation including a plurality of pixels, each pixel corresponding to a location, each pixel having a color in accordance with a total quantity of discharges of the plurality at the pixel location and having a transparency in accordance with the respective age of each discharge of the total quantity at the pixel location.

29. A method performed by one or more processors, the method comprising forming a graphic presentation that describes a plurality of lightning discharges, the plurality comprising discharges above ground and discharges to ground, each discharge above ground having a respective location as projected onto the ground, each discharge to ground having a respective location at the ground, each discharge having a respective age, the presentation including a plurality of pixels, each pixel corresponding to a location, each pixel having a color in accordance with a quantity of discharges to ground of the plurality at the pixel location and having a transparency in accordance with the respective age of each discharge of the total quantity at the pixel location.

FIG. 1

FIG. 2

FIG. 3

400

BEGIN

FOR EACH FRAME — 402

FOR EACH PIXEL — 404

A[X,Y].COLOR = S[X,Y].COLOR — 406

FOR EACH CONDITION — 408

FOR EACH SAMPLE — 410

AFFECT A[X,Y] PER SAMPLE OF CONDITION, STORE RESULT — 412

GET NEXT SAMPLE — 414

GET NEXT CONDITION — 416

GET NEXT PIXEL — 418

GET NEXT FRAME — 420

END

FIG. 4

FIG. 5

FIG. 6

700

SEQUENCE

X

Z

Y

712

708

706

704

702

FIG. 7

FIG. 8

BEGIN

ALLOCATE POOL, ARRAY, AND CANVASES ⟩— 902

FOR EACH FRAME — 904

DISCARD OLD STORE DATA — 906

PROCESS CURRENT EVENTS — 908

RENDER SURFACE W/O PERSPECTIVE — 912

RENDER REGIONS **FOR** CG STROKE HISTORY — 914

RENDER REGIONS FOR SHADOWS OF BODIES — 916

TRANSFORM CANVAS TO PERSPECTIVE CANVAS — 918

APPLY SPATIAL SMOOTHING — 919

CREATE BODIES FOR CURRENT TOTAL TL EVENTS — 920

APPLY STRATIFICATION — 922

RENDER BODIES WITH PERSPECTIVE — 924

RENDER FLASH **ICON** — 926

GET NEXT FRAME — 928

END

FIG. 9

— 900